# FASCICULE DE BREVET EUROPEEN

(11) **EP 1 750 975 B1**
(45) Date de publication et mention de la délivrance du brevet: **12.03.2008**
(21) Numéro de dépôt: 05762680.6
(22) Date de dépôt: 12.05.2005
(51) Int. Cl.: B60R 13/08, B60R 21/04

(54) **DISPOSITIF DE RECOUVREMENT DE PLANCHER DE VEHICULE**
VORRICHTUNG ZUR ABDECKUNG EINES KAROSSERIEBODENS
DEVICE FOR COVERING A VEHICLE FLOOR PAN

(30) Priorité: 17.05.2004 FR 0450964
(43) Date de publication de la demande: 14.02.2007
(73) Titulaire: RENAULT S.A.S., 92100 Boulogne Billancourt (FR)
(72) Inventeur: BOUILLON, Jean-Charles, F-78940 LA QUEUE LEZ YVELINES (FR)
(86) Numéro de dépôt international: PCT/FR2005/050316
(87) Numéro de publication internationale: WO 2005/113296

(56) Documents cités:
- GB-A- 2 360 258
- US-A- 6 070 905

## Description

La présente invention se rapporte à un dispositif de recouvrement de plancher de véhicule. Elle concerne en particulier un tel qui comporte un matériau insonorisant adapté à recouvrir au moins une portion d'un plancher d'un véhicule. Un tel dispositif est décrit dans le document US 6 070 905.

Dans un exemple connu d'un tel dispositif, le matériau insonorisant est une mousse polyuréthanne qui recouvre sensiblement tout le plancher du véhicule entre une extrémité avant situé au niveau de la fixation du pédalier et une extrémité arrière sous la banquette arrière. La mousse est généralement recouverte par un tapis ou moquette. Le dispositif doit résister au poids d'un utilisateur entrant ou sortant de l'habitacle du véhicule, ainsi qu'au poids des membres inférieurs de l'utilisateur quand il est assis. Le dispositif doit aussi assurer l'insonorisation du véhicule, c'est-à-dire qu'il doit réduire la transmission d'ondes vibratoires du plancher vers l'habitacle du véhicule, le plancher, étant soumis à des vibrations dont l'origine vient essentiellement du groupe moto propulseur et des trains roulants.

L'invention vise à améliorer les capacités mécaniques et acoustiques d'un tel dispositif.

Afin d'améliorer la résistance mécanique d'un tel dispositif, un dispositif comportant un bloc de renfort en polystyrène expansé a été testé dans un véhicule automobile. Dans ce dispositif, la forme du bloc est sensiblement un parallélépipède rectangle plein, par exemple de 80 ou 100 millimètres de hauteur, 550 millimètre de long et 450 millimètres de large. Il est muni de pieds de quelques millimètres de hauteur, prévus pour être en contact avec le plancher. Le bloc est noyé dans la mousse, sous le tapis, à l'exception de la face inférieure des pieds. Dans le dispositif testé, la densité du bloc est nettement inférieure à la densité de la mousse, à la faveur de la masse globale du dispositif. Le bloc plein d'un tel dispositif entre en résonance quand il est soumis à des ondes dont la fréquence est comprise entre 30 à 300 Hertz, au détriment du confort acoustique des utilisateurs du véhicule.

Afin d'améliorer la résistance mécanique d'un tel dispositif, un dispositif comportant, pour remplacer des blocs pleins, un renfort évidé comportant une plaque supérieure raccordée à des pieds de section par exemple circulaire ou rectangulaire a aussi été testé dans un véhicule. La plaque, dont l'épaisseur est inférieure à 40 millimètres, n'entre pas en résonance dans l'intervalle de fréquence ci-dessus. Un comportement acoustique efficace a été constaté quand les pieds sont séparés d'une distance sensiblement égale à leur diamètre ou à la valeur de leur largeur ou longueur. Un tel dispositif n'est cependant pas avantageux car sa masse est nettement supérieure, de l'ordre de un à trois kilogramme par véhicule. De plus le dispositif comportant le renfort évidé avec plaque et pieds est plus onéreux, du fait de la quantité de mousse plus importante utilisée.

Le problème de résonance du bloc se pose tant pour un renfort de plancher horizontal tel que décrit ci-dessus que pour des cales d'absorption d'énergie placées sous la planche de bord pour protéger les pieds des utilisateurs, côté passager ou côté conducteur sous le pédalier.

Les cales d'absorption d'énergie sous planche de bord sont aussi des blocs de renfort qui sont susceptible d'entrer en résonance entre 30 et 300 Hertz. U problème supplémentaire est que pour lesdites cales, les contraintes de conception propres au traitement de la sécurité des membres inférieurs des utilisateurs entrent de façon primordiale en ligne de compte, les contraintes résultant du traitement de la prestation acoustique du véhicule venant s'ajouter aux contraintes résultant de la prestation sécurité.

L'invention a pour objet un dispositif de recouvrement d'au moins une portion d'un plancher d'un véhicule comportant un matériau insonorisant, caractérisé en ce que :
- le dispositif comporte au moins un bloc de renfort,
- le bloc de renfort est recouvert au moins partiellement par le matériau insonorisant,
- la face inférieure du bloc délimite au moins une fente creusée sur une partie de la hauteur du bloc.

Avantageusement, selon l'invention, les caractéristiques mécaniques et acoustiques du dispositif sont améliorées, ainsi que le prix.

La hauteur de la fente peut être supérieure à la moitié de la hauteur du bloc, la différence entre la hauteur du bloc et la hauteur de la fente pouvant être supérieure à 10 millimètres.

La fente peut diviser une partie inférieure du bloc en une pluralité de pavés ayant une fréquence de résonance propre, la fréquence de résonance du bloc pouvant être hors de l'intervalle compris entre 30 et 300 Hertz.

La fente peut diviser une partie inférieure du bloc en une pluralité de pavés, chaque pavé pouvant comporter un pied adapté être en appui sur le plancher du véhicule.

Le matériau insonorisant peut remplir au moins partiellement les fentes.

La densité du bloc peut être inférieure à la densité du matériau insonorisant.

La fente peut déboucher latéralement entre deux faces opposées du bloc.

Le bloc pouvant être destiné à coopérer avec le plancher sous une planche de bord du véhicule, le bloc pouvant constituer un renfort de sécurité comportant une pluralité de zones dédiées à l'absorption d'énergie mécanique en cas de choc, chaque zone pouvant être adaptée à être en regard de l'un des pieds d'un usager du véhicule, la fente peut être aménagée au niveau de la limite entre deux zones.

Le bloc pouvant être destiné à coopérer avec le plancher sous un pédalier de véhicule, une première portion du bloc dans une première zone pouvant être située latéralement à la pédale de frein côté repose pied, une deuxième portion du bloc dans une deuxième zone pouvant être située latéralement à la pédale de frein côté pédale d'accélérateur, la fente peut être sensiblement longitudinale, entre la première et la deuxième portion.

L'invention a également pour objet un véhicule qui comporte un dispositif de recouvrement tel que défini précédemment, le dispositif pouvant être un dispositif acoustique dont le bloc est un bloc de renfort prévu au moins pour supporter le poids d'au moins un pied d'un utilisateur du véhicule, la fente participant à l'insonorisation du véhicule.

D'autres caractéristiques et avantages de l'invention apparaîtront clairement à la lecture de la description suivante du mode de réalisation non limitatif de celle-ci, en liaison avec les dessins annexés sur lesquels :
- la figure 1 est une vue en coupe longitudinale d'un habitacle de véhicule équipé d'un dispositif selon l'invention,
- la figure 2 est une vue de face d'un premier mode de réalisation d'un bloc de renfort d'un dispositif selon l'invention,
- la figure 3 est une vue de dessous du bloc de renfort de la figure 1,
- la figure 4 est une vue de face d'un deuxième mode de réalisation d'un bloc de renfort d'un dispositif selon l'invention,
- la figure 5 est une vue de côté du bloc de renfort de la figure 4,
- la figure 6 est une vue de dessous du bloc de renfort de la figure 4,
- la figure 7 est une vue en perspective de trois quart arrière et de dessus d'un troisième mode de réalisation d'un bloc de renfort d'un dispositif selon l'invention,
- la figure 8 est une vue en perspective de trois quart avant et de dessous du bloc de renfort de la figure 7,
- la figure 9 est une vue arrière du bloc de renfort de la figure 7, représenté dans son environnement d'utilisation, à savoir sous le pédalier d'un véhicule.

Dans la description qui va suivre, la direction désignée L est la direction longitudinale correspondant à l'axe d'avancement d'un véhicule, la direction désignée T est transversale, la direction désignée V est verticale. L'axe L est orienté de l'avant vers l'arrière du véhicule, l'axe T de la gauche vers la droite et l'axe V du bas vers le haut.

Traditionnellement, un véhicule automobile est équipé d'un plancher 10 en tôle sur des traverses 18 et longerons (non représentés) de structure du véhicule. Le plancher 10 est soumis à des vibrations d'origines mécaniques, à savoir des vibrations crées par le moteur, la boîte de vitesse ou les trains roulants. Un pédalier 12' est généralement fixé au plancher 10, sous une planche de bord 14.

L'invention a trait à un dispositif d'habillage du plancher 10 typiquement recouvert d'un tapis 16 ou moquette, destiné à assurer l'insonorisation du plancher 10 tout en ayant une résistance mécanique susceptible de sauvegarder l'apparence du tapis 16. Le plancher 10 est recouvert par une mousse polyuréthanne 20 de son extrémité avant située sous la planche de bord, au niveau du pédalier 12, jusqu'à son extrémité arrière située sous la banquette arrière. La mousse est une mousse insonorisante qui absorbe ou amorti des ondes mécaniques et acoustiques 11. Des blocs de renfort en polystyrène expansé sont au moins partiellement noyés dans la mousse 20, afin d'assurer la solidité mécanique du dispositif. Un bloc doit être capable de résister à la pression de 80 kilogrammes appliquée par un pied d'un utilisateur entrant ou sortant du véhicule.

Un bloc de renfort avant 30 est recouvert par la mousse 20 sur sa face inférieure. Un bloc de renfort médian 32 et un bloc de renfort arrières 34 sont recouverts par la mousse 20 sur leur face inférieure et sur leur face supérieure.

Dans l'exemple représenté, l'habillage de plancher comporte trois parties chacune avec un dispositif selon l'invention. Une partie avant correspondant au bloc 30 et à la mousse qui le recouvre est placée sous le pédalier 12, en particulier sous les pédales 13. Une partie médiane correspondant au bloc 32 et à la mousse qui l'enveloppe est placée entre la partie avant et une des traverses 18 située sous un siège avant du véhicule, ici côté conducteur. Une partie arrière correspondant au bloc 34 et à la mousse qui l'enveloppe est placée entre la traverse 18 et une marche du plancher sur laquelle est monté une banquette arrière. Le bloc 34 est placé devant, derrière et au dessus de l'autre des traverses 18 de la structure, une rainure 35 permettant le chevauchement de la traverse 18.

Une partie non représentée comporte un dispositif selon l'invention côté passager avant, comme côté conducteur avant, toujours sous la planche de bord. Si l'architecture du véhicule s'y prête, un dispositif selon l'invention peut être disposé en partie avant ou en partie médiane.

Les blocs avant constituent des cales d'absorption d'énergie, en particulier pour la sécurité des pieds des utilisateurs.

Les blocs 32 et 34 comportent une face supérieure plane 40, des faces latérales transversales 42, des faces latérales longitudinales 43. Le contour du bloc est sensiblement en forme de pyramide tronquée, dont la base, carrée ou rectangulaire, est la face supérieure 40. Cette forme permet l'adaptation aux dimensions du véhicule et la fabrication aisée des blocs.

Les blocs 32 et 34 comportent une surface inférieure plane 44 qui est raccordée à des pieds 46. Les pieds 46 sont au contact du plancher 10 à leur extrémité libre.

La surface inférieure 44 est raccordée à des surfaces sensiblement verticales placées sur les côtés de fentes 48 transversales formant des saignées creusées sensiblement parallèlement aux faces latérales 42. Les fentes 48 débouchent sur des faces latérales longitudinales. La section des fentes est sensiblement triangulaire, de telle façon à faciliter le démoulage. De plus, les fentes 48 doivent être facile à remplir par la mousse 20.

Ici, les blocs 32 et 34 sont noyées dans la mousse 20 qui recouvre toutes ses faces, à l'exception de la face inférieure des pieds 46 qui est adaptée à être en contact avec le plancher 10.

Ici seules les faces latérales et inférieures du bloc avant 30 sont recouvertes par la mousse 20, les faces supérieures en face du pédalier étant directement recouvertes par le tapis 16.

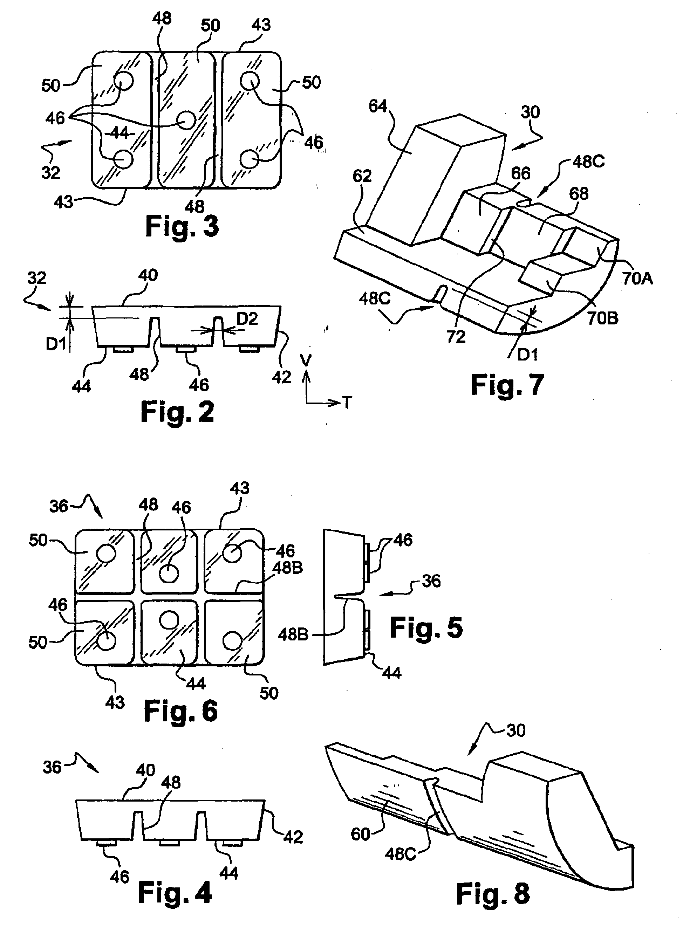

La distance D1 (représentée à la figure 2) est telle que, quelle que soit la hauteur du bloc 32 ou 34, le bloc supporte le poids de 80 kilogrammes appliqué par une semelle de chaussure. Pour un bloc 32, 34 en polystyrène expansé, D1 est comprise entre 20 et 30 millimètres. De manière générale, D1 est typiquement supérieure à 10 millimètres, en fonction des caractéristiques mécaniques du matériau utilisé.

Afin d'optimiser le rapport masse et efficacité acoustique des blocs 32 et 34, les fentes 48 doivent être aussi étroites que possible, la distance D2 correspondant sensiblement à la distance minimale résultant des moyens de fabrication des bloc 32 et 34, typiquement des moyens de fabrication par moulage. Un autre facteur à prendre en compte pour déterminer la distance D2 est la faculté de remplissage des fentes 48 par la mousse 20. Dans le mode de réalisation représenté, la largeur D2 de la fente à mi hauteur est' comprise entre un sixième et un dixième de la hauteur du bloc.

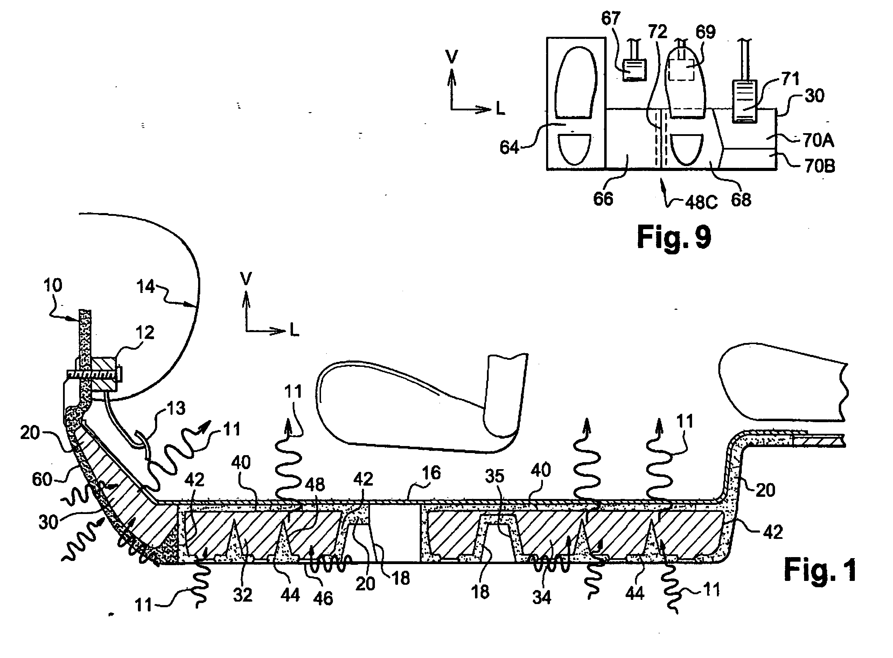

Le bloc 32 qui a été décrit en relation avec les figures 1 à 3 est un bloc médian, mais il pourrait être utilisé dans une partie arrière si l'architecture du véhicule s'y prête.

Il est a remarquer que les fentes 48 divisent le bloc 32, en particulier, les fentes divisent une partie inférieure du bloc en une pluralité de pavés 50, ici de dimensions identiques. Dans l'exemple représenté, la distance séparant deux fentes parallèles 48 est sensiblement égale à la hauteur du bloc. Typiquement, la hauteur du bloc est comprise entre 40 et 140 millimètres, en fonction de l'architecture du véhicule.

Chaque pavé 50 comporte au moins un pied 46 adapté être en appui sur le plancher du véhicule. Ici, les pavés 50 situés à l'avant et à l'arrière comportent deux pieds 46 latéraux, le pavé 50 situé au milieu comporte un unique pied central. Cette disposition est favorable à la répartition des efforts d'appui du bloc sur le plancher.

Le bloc 36 qui va être décrit en relation avec les figures 4 à 6 est un bloc destiné à être utilisé dans une partie médiane ou une partie arrière.

Le bloc 36 comporte des fentes 48 transversales et des fentes longitudinales 48B dont caractéristiques dimensionnelles sont sensiblement identiques. Les six pavés 50 sont aussi de dimensions sensiblement identiques.

Le bloc qui va être décrit en relation avec les figures 7 à 9 est un bloc d'une partie avant, tel que le bloc 30 de la figure 1 côté conducteur. Le bloc 30 constitue une cale d'absorption d'énergie pour abaisser les risques de blessure du conducteur, en particulier au niveau des pieds, en cas d'accident violent.

La face avant 60 qui est aussi la face inférieure du bloc 50 est, comme vu précédemment, adaptée à être en appui sur le plancher 10 par l'intermédiaire de la mousse 20. La face 60 comporte une fente 48C, qui la divise en deux portions sensiblement égales. Elle comporte une surface horizontale supérieure destinée à l'appui des talons du conducteur. Une face arrière 64 sert de repose pied. Une autre face arrière 66 est destinée à être placée sous la pédale d'embrayage 67. Une autre face arrière, 68 est destinée à être placée sous la pédale de frein 69. Deux autres faces arrières 70 sont destinées à être placées sous la pédale d'accélérateur 71. Il y a butée éventuelle de la pédale 71 sur le tapis posé sur la face 70A ou 70B en position d'enfoncement maximum de ladite pédale 71. Dans l'exemple représenté, une face, 72 sensiblement longitudinale est raccordée aux faces 66 et 68, à un niveau situé entre la pédale d'embrayage 67 et la pédale de frein 69.

La fente 48C est placée avantageusement à un niveau sensiblement entre la pédale d'embrayage 67 et la pédale de frein 69, c'est-à-dire à un niveau situé entre les deux pieds du conducteur. La fente 48C permet de disposer d'une zone d'affaiblissement du bloc 30, de telle manière qu'en cas d'accident violent avec déformation du plancher 30 sous le pédalier, le bloc puisse se rompre, sans risquer de nuire à l'efficacité de la prestation sécurité. La rupture du bloc 30, avec absorption d'énergie, dans une zone située entre les deux pieds du conducteur, est favorable à la sécurité passive du véhicule, l'emplacement de la fente étant judicieux.

Avantageusement, la fente 48C permet une optimisation de la masse du bloc de renfort 30, une amélioration de l'acoustique du véhicule et la préservation de la sécurité passive du véhicule.

Selon l'invention, les fentes 48, 48B, 48C améliorent l'acoustique du véhicule car elle permettent de disposer de blocs de renfort 30, 32, 34, 36 dont le contour est sensiblement formé de parallélépipèdes rectangles fabriqués dans un matériau léger et économique, et dont la fréquence de résonance est hors d'un intervalle de fréquences allant de 30 à 300 hertz. En effet, les fentes formant des saignées dans l'épaisseur du bloc, elle permettent d'éviter d'utiliser des blocs pleins dont la fréquence de résonance est comprise dans l'intervalle précité. Si les blocs entrent en résonance quand ils sont soumis à des ondes d'une telle fréquence, ils sont à l'origine de bruits préjudiciable à la prestation acoustique du véhicule. Les fentes permettent de diviser le volume des bloc en des volumes plus petits dont la fréquence de résonance propre est telle que la fréquence de résonance propre des blocs est hors de l'intervalle compris entre 30 et 300 Hertz.

La profondeur ou la hauteur des fentes est supérieure à la moitié de l'épaisseur des blocs, de manière à diviser le bloc pour que sa fréquence propre de résonance soit différente de celle d'un bloc plein de contour équivalent.

Avantageusement, les blocs de renfort forment des pièces d'allégement de l'habillage du plancher, car elles sont fabriquées dans une matière plus légère que la mousse 20 en matériau insonorisant.

En remplacement de la mousse, une couche de feutre peut être utilisée pour recouvrir les blocs en guise de matériau insonorisant. Le volume optimisé des blocs avec les fentes de division est favorable au coût du dispositif selon l'invention, les fentes permettant d'utiliser des blocs dont le contour est sensiblement un parallélépipède rectangle sur les faces duquel la couche de feutre est facile à appliquer. Le feutre peut remplir au moins partiellement les fentes.

Le matériau insonorisant permet d'amortir les vibrations mécaniques et les ondes acoustiques qui en résultent. Par contre, le matériau des blocs de renfort n'est pas choisi pour avoir des capacités pour absorber des vibrations mécaniques ou des ondes acoustiques. Cependant, la section des pieds est prévue de telle manière à réduire la surface transmission des vibrations du plancher vers les blocs de renfort au minimum nécessaire. La présence du matériau insonorisant autour des pieds est favorable à la prestation acoustique du véhicule.

Il est a noter que les fentes sont ménagées dans l'épaisseur des bloc, l'épaisseur étant ici la hauteur des bloc. Les fentes sont borgnes, c'est à dire qu'elles ne traversent pas le bloc dans toute son épaisseur. A titre de variantes, la face inférieure des blocs ferme l'extrémité des fentes.

A titre de variante, des trous de remplissage des fentes, par exemple cylindriques, peuvent être ménagés ponctuellement entre le fond des fentes et la face supérieure des blocs. Les fentes sont alors débouchantes au lieu d'être borgne, ponctuellement pour la bonne répartition de la mousse dans les fentes.

Concernant en particulier les blocs avant sous planche de bord 14, il est à remarquer que les fentes 48C sont ménagées entre des zones spécifiquement dédiées à la sécurité sous les pieds des utilisateurs, afin de préserver les capacités d'absorption d'énergie en cas de choc, chaque zone étant adaptée à être en regard de l'un des pieds d'un usager du véhicule, la fente 48C est aménagée au niveau de la limite entre deux zones.

Plus spécifiquement, côté conducteur, le bloc 30 étant destiné à coopérer avec le plancher sous un pédalier de véhicule, une première portion du bloc dans une première zone est située latéralement à la pédale de frein 69 côté repose pied, ici au niveau des faces 64 et 66. Une deuxième portion du bloc dans une deuxième zone est située latéralement à la pédale de frein 69, côté pédale d'accélérateur 71. La fente 48C est sensiblement longitudinale, entre la première et la deuxième portion.

Les fentes décrites ci-dessus sont longitudinales et transversales, rectilignes et débouchantes à leurs extrémités. A titre de variante, les fentes sont rectilignes et placées en diagonale des blocs. A titre de variante, les fentes sont courbes.

## Revendications

1. Dispositif de recouvrement d'au moins une portion d'un plancher (10) d'un véhicule comportant un matériau insonorisant (20), **caractérisé en ce que** :
- le dispositif comporte au moins un bloc de renfort (30, 32, 34, 36),
- le bloc de renfort (30, 32, 34, 36) est recouvert au moins partiellement par le matériau insonorisant (20),
- la face inférieure (44) du bloc délimite au moins une fente. (48, 48B, 48C) creusée sur une partie de la hauteur du bloc (30, 32, 34, 36).

2. Dispositif selon la revendication 1, **caractérisé en ce que** la hauteur de la fente (48, 48B, 48C) est supérieure à la moitié de la hauteur du bloc (30, 32, 34, 36), la différence entre la hauteur du bloc et la hauteur de la fente étant supérieure à 10 millimètres.

3. Dispositif selon l'une quelconque des revendications précédentes, **caractérisé en ce que** la fente (48, 48B, 48C) divise une partie inférieure du bloc (30, 32, 34, 36) en une pluralité de pavés (50) ayant une fréquence de résonance propre, la fréquence de résonance du bloc étant hors de l'intervalle compris entre 30 et 300 Hertz.

4. Dispositif selon l'une quelconque des revendications précédentes, **caractérisé en ce que** la fente (48, 48B) divise une partie inférieure du bloc (32, 34, 36) en une pluralité de pavés (50), chaque pavé comportant un pied (46) adapté être en appui sur le plancher (10) du véhicule.

5. Dispositif selon l'une quelconque des revendications précédentes, **caractérisé en ce que** le matériau insonorisant (20) remplit au moins partiellement les fentes (48, 48B, 48C).

6. Dispositif selon la revendication précédente, **caractérisé en ce que** la densité du bloc (30, 32, 34, 36) est inférieure à la densité du matériau insonorisant (20).

7. Dispositif selon l'une quelconque des revendications précédentes, **caractérisé en ce que** la fente (48, 48B, 48C) débouche latéralement entre deux faces opposées (42, 43) du bloc.

8. Dispositif selon l'une quelconque des revendications précédentes, **caractérisé en ce que** le bloc (30) étant destiné à coopérer avec le plancher (10) sous une planche de bord (14) du véhicule, le bloc constituant un renfort de sécurité comportant une pluralité de zones dédiées à l'absorption d'énergie mécanique en cas de choc, chaque zone étant adaptée à être en regard de l'un des pieds d'un usager du véhicule, la fente (48C) est aménagée au niveau de la limite entre deux zones.

9. Dispositif selon la revendication précédente, **caractérisé en ce que** le bloc (30) étant destiné à coopérer avec le plancher (10) sous un pédalier de véhicule, une première portion du bloc dans une première zone étant située latéralement à la pédale de frein (69) côté repose pied (64), une deuxième portion du bloc dans une deuxième zone étant située latéralement à la pédale de frein (69) côté pédale d'accélérateur (71), la fente (48C) est sensiblement longitudinale, entre la première et la deuxième portion.

10. Véhicule **caractérisé en ce qu'**il comporte un dispositif de recouvrement selon l'une quelconque des revendications précédentes, le dispositif étant un dispositif dont le bloc (30, 32, 34, 36) est un bloc de renfort prévu au moins pour supporter le poids d'au moins un pied d'un utilisateur du véhicule, la fente (48, 48B, 48C) participant à l'insonorisation du véhicule.

## Claims

1. Device for covering at least one portion of a vehicle floor pan (10) comprising a sound-absorbing material (20), **characterized in that**:
- the device comprises at least one reinforcing block (30, 32, 34, 36) ;
- the reinforcing block (30, 32, 34, 36) is covered at least partially by the sound-absorbing material (20);
- the lower face (44) of the block defines at least one slit (48, 48B, 48C) which is hollowed out over part of the height of the block (30, 32, 34, 36).

2. Device according to Claim 1, **characterized in that** the height of the slit (48, 48B, 48C) is greater than half of the height of the block (30, 32, 34, 36), the difference between the height of the block and the height of the slit being more than 10 millimetres.

3. Device according to either of the preceding claims, **characterized in that** the slit (48, 48B, 48C) divides a lower part of the block (30, 32, 34, 36) into a series of rectangles (50) having a natural resonance frequency, the resonance frequency of the block being outside the 30 to 300-hertz range.

4. Device according to any one of the preceding claims, **characterized in that** the slit (48, 48B) divides a lower part of the block (32, 34, 36) into a series of rectangles (50), each rectangle comprising a foot (46) arranged to bear on the floor pan (10) of the , vehicle.

5. Device according to any one of the preceding claims, **characterized in that** the sound-absorbing material (20) at least partially fills the slits (48, 48B, 48C).

6. Device according to the preceding claim, **characterized in that** the density of the block (30, 32, 34, 36) is less than the density of the sound-absorbing material (20).

7. Device according to any one of the preceding claims, **characterized in that** the slit (48, 48B, 48C) is open laterally between two opposite sides (42, 43) of the block.

8. Device according to any one of the preceding claims, **characterized in that** since the block (30) is intended to co-operate with the floor pan (10) under the dashboard (14) of a vehicle, the block constituting a safety reinforcement comprising a series of zones reserved for the absorption of mechanical energy in an impact, each zone being arranged to be facing one of the feet of a vehicle user, the slit (48C) is made at the boundary between two zones.

9. Device according to the preceding claim, **characterized in that** since the block (30) is intended to co-operate with the floor pan (10) behind a vehicle pedal assembly, a first portion of the block in a first zone being located beside the brake pedal (69) on the footrest (64) side, a second portion of the block in a second zone being located beside the brake pedal (69) on the accelerator pedal (71) side, the slit (48C) is generally longitudinal, between the first and the second portions.

10. Vehicle **characterized in that** it comprises a covering device according to any one of the preceding claims, the device being a device of which the block (30, 32, 34, 36) is a reinforcing block designed at least to support the weight of at least one foot of a vehicle user, the slit (48, 48B, 48C) contributing to the sound-proofing of the vehicle.

## Patentansprüche

1. Vorrichtung zur mindestens teilweisen. Abdeckung eines Karosseriebodens (10), umfassend ein schalldämmendes Material (20), **dadurch gekennzeichnet, dass**:
- die Vorrichtung mindestens einen Verstärkungsblock (30, 32, 34, 36) aufweist,
- der Verstärkungsblock (30, 32, 34, 36) mindestens teilweise mit dem schalldämmenden Material (20) bedeckt ist,
- die Unterseite (44) des Blocks mindestens einen Schlitz (48, 48B, 48C) begrenzt; der auf einem Teil der Höhe des Blocks (30, 32, 34, 36) ausgehöhlt ist.

2. Vorrichtung nach Anspruch 1, **dadurch gekennzeichnet, dass** die Höhe des Schlitzes (48, 48B, 48C) größer ist als die Hälfte der Höhe des Blocks (30, 32, 34, 36), wobei die Differenz zwischen der Höhe des Blocks und der Höhe des Schlitzes größer ist als 10 Millimeter.

3. Vorrichtung nach einem der vorherigen Ansprüche, **dadurch gekennzeichnet, dass** der Schlitz (48, 48B, 48C) ein Unterteil des Blocks (30, 32; 34, 36) in mehrere Würfel (50) aufteilt, die eine eigene Resonanzfrequenz aufweisen, wobei die Resonanzfrequenz des Blocks außerhalb des Intervalls zwischen 30 und 300 Hertz liegt.

4. Vorrichtung nach einem der vorherigen Ansprüche, **dadurch gekennzeichnet, dass** der Schlitz (48, 48B) ein Unterteil des Blocks (32, 34, 36) in mehrere Würfel (50) aufteilt, wobei jeder Würfel einen Fuß (46) aufweist, der geeignet ist, auf dem Karosserieboden (10) aufzuliegen.

5. Vorrichtung nach einem der vorherigen Ansprüche, **dadurch gekennzeichnet, dass** das schalldämmende Material (20) die Schlitze (48, 48B, 48C) mindestens zum Teil ausfüllt.

6. Vorrichtung nach einem der vorherigen Ansprüche, **dadurch gekennzeichnet, dass** die Dichte des Blocks (30, 32, 34, 36) kleiner ist als die Dichte des schalldämmenden Materials (20).

7. Vorrichtung nach einem der vorherigen Ansprüche, **dadurch gekennzeichnet, dass** der Schlitz (48, 48B, 48C) seitlich zwischen zwei gegenüberliegenden Seiten (42, 43) des Blocks austritt.

8. Vorrichtung nach einem der vorherigen Ansprüche, **dadurch gekennzeichnet, dass** der Block (30) dazu bestimmt ist, mit dem Boden (10) unter einem Armaturenbrett (14) des Fahrzeugs zusammenzuwirken, wobei der Block eine Sicherheitsverstärkung darstellt, die mehrere Zonen aufweist, die im Falle eines Aufpralls die Absorption der mechanischen Energie gewährleisten, wobei jede Zone geeignet ist, einem der Füße eines Fahrzeuginsassen gegenüberzustehen, und der Schlitz (48C) an der Grenze zwischen zwei Zonen ausgespart ist.

9. Vorrichtung nach dem vorherigen Anspruch, **dadurch gekennzeichnet, dass** der Block (30) dazu bestimmt ist, mit dem Boden (10) unter einem Pedalwerk des Fahrzeugs zusammenzuwirken, wobei ein erster Abschnitt des Blocks in einer ersten Zone seitlich des Bremspedals (69) auf Seiten der Fußauflage (64) angeordnet ist, ein zweiter Abschnitt des Blocks in einer zweiten Zone seitlich des Bremspedals (69) auf Seiten des Gaspedals (71) angeordnet ist, der Schlitz (48C) zwischen dem ersten und zweiten Abschnitt im Wesentlichen länglich ist.

10. Fahrzeug, **dadurch gekennzeichnet, dass** es eine Vorrichtung zur Abdeckung nach einem der vorherigen Ansprüche umfasst, wobei die Vorrichtung eine Vorrichtung ist, deren Block (30, 32, 34, 36) ein Verstärkungsblock ist, der mindestens vorgesehen ist, um das Gewicht mindestens eines Fußes eines Fahrzeuginsassen zu tragen, wobei der Schlitz (48, 48B, 48C) zur Schalldämmung des Fahrzeugs beiträgt.
